# EUROPEAN PATENT APPLICATION

(11) **EP 1 713 264 A2**
(43) Date of publication of application: **18.10.2006**
(21) Application number: 06007606.4
(22) Date of filing: 11.04.2006
(51) Int. Cl.: H04N 5/445, H04N 5/00

(54) **Method for managing channel information in digital multimedia broadcast receiver**

(30) Priority: 12.04.2005 KR 20050030173; 20.07.2005 KR 20050065898
(71) Applicant: LG Electronics Inc., Yongdungpo-Gu Seoul 150-010 (KR)
(72) Inventor: Choi, Sang Hyuck, Suwon-si Kyunnggi-do 443-470 (KR); Park, Kyoung Jun, 805-202 Doosan Apt., Suwon-si, Kyunggi-do 443-470 (KR)
(74) Representative: Vossius & Partner

(57) **Abstract**

A mobile terminal and method for managing channel information in a DMB receiver, are discussed. According to an embodiment, the method for managing channel information in a DMB device, includes managing, in the DMB device, channel information of each of different channel types of DMB independently.

## Description

The present invention relates to a method for managing channel information in a Digital Multimedia Broadcast (DMB) receiver, and more particularly to a DMB device and method for allowing a user to easily select a desired broadcast on the DMB device having a DMB reception function.

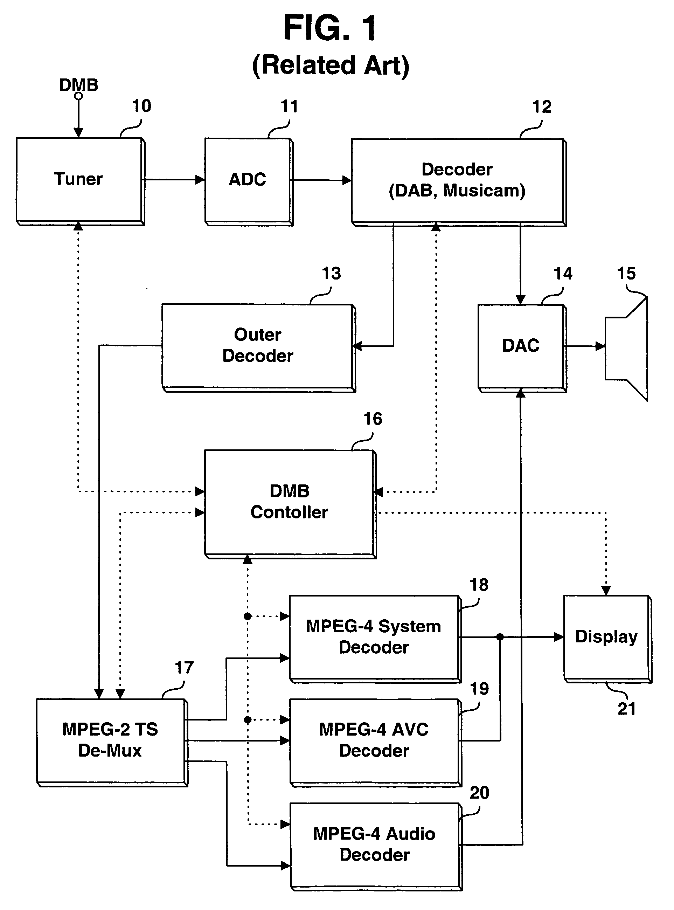

FIG. 1 is a block diagram of a general DMB receiver, for example, a mobile terminal such as a mobile phone or a PDA having a DMB reception and playback function. As shown in FIG. 1, the DMB receiver comprises a tuner 10, an A/D converter 11, a decoder 12, an outer decoder 13, a D/A converter 14, a speaker 15, a DMB controller 16, an MPEG-2 TS demuxer 17, an MPEG-4 system decoder 18, an MPEG-4 Advanced Video Coding (AVC) decoder 19, an MPEG-4 audio decoder 20, and a display 21.

When the user requests that automatic broadcast channel setting be performed, the DMB controller 16 controls the operation of the tuner 10 and the decoder 12 to automatically scan a variety of video, audio, and data channels provided through terrestrial or satellite Digital Multimedia Broadcasting (DMB), to integrate the scanned video, audio, and data channels, and then to store and manage them as an integrated DMB channel map.

The DMB controller 16 reads information on channels selectable by the user from the stored integrated DMB channel map at the request of the user, and displays the read channel information on the display 21. When the user selects a channel with reference to the displayed channel information, the DMB controller 16 controls the operation of the tuner 10 to tune in to the corresponding broadcast channel.

The A/D converter 11 converts a DMB signal received through the tuner 10 into a digital signal, and the decoder 12 (for example, a DAB channel decoder or a Musicam decoder) decodes the digital signal into a digital broadcast data stream. The outer decoder 13 performs ECC error correction of the decoded broadcast data stream. The MPEG-2 TS demuxer 17 demultiplexes the error corrected data stream to separate it into MPEG-4 video data (e.g. , movie), audio (e.g. radio), and data information (e.g., current stock status).

The MPEG-4 system decoder 18 decodes the separated data information, the MPEG-4 AVC decoder 19 decodes the separated video data, and the MPEG-4 audio decoder 20 decodes the separated audio data. Then the video data and the data information output from the MPEG-4 AVC decoder 19 and the MPEG-4 system decoder 18 are displayed on the display 21. The output of the MPEG-4 audio decoder 20 is output to the speaker 15.

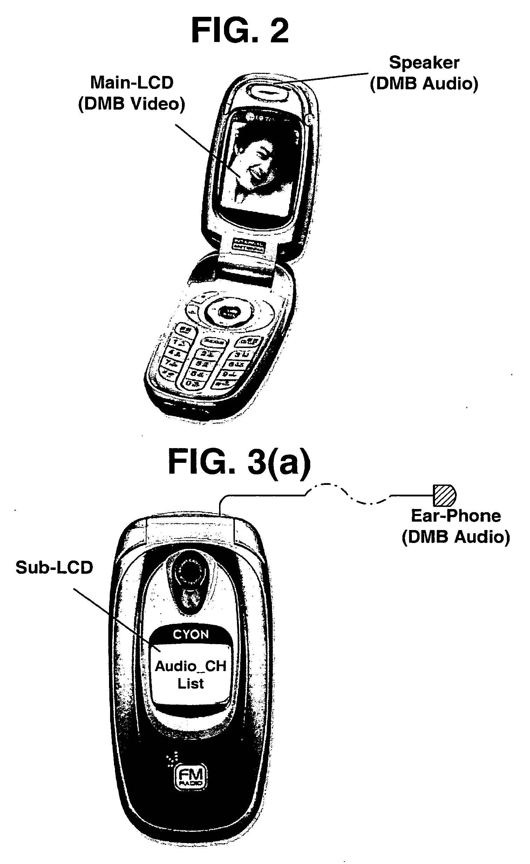

As shown in FIG. 2, video corresponding to the video data output from the MPEG-AVC decoder 19 is displayed on a main screen (for example, a main LCD) of the mobile terminal. A sound corresponding to the audio data is output through the speaker of the mobile terminal. Thus, the user can watch and listen to video and audio of a DMB channel they have selected.

As described above, the DMB receiver integrates audio, video, and data channels and manages the integrated channels as a single DMB channel map. Accordingly, even when a user is interested in only the audio data, not only audio channels but also video and data channels are displayed together on a small sub screen mounted on an external portion of a folder type mobile terminal having a DMB reception function. The displayed audio and video channels are not discriminated, thereby causing confusion for the user. In addition, a large number of key operations are required to select a desired audio broadcast since so many channels are displayed at one time.

In addition, the mobile terminal such as a mobile phone or a PDA having a DMB reception and playback function displays Electronic Program Guide (EPG) information on its screen at the request of the user. However, both DMB video and EPG information cannot be displayed on the screen at the same time due to its limited screen size. As such, there is no choice but to display them alternately on the screen, in which case the user is unable to simultaneously view all the desired information.

It is an object of the present invention to provide a method for allowing users to easily select a desired broadcast from a number of channels provided through Digital Multimedia Broadcasting (DMB) in various types of terminals such as mobile phones or PDAs having a DMB function.

It is another object of the present invention to provide a method for displaying only the channels of a broadcast type desired by the user, among a number of different types of broadcasts such as audio, video, and data broadcasts provided through DMB in a terminal having a DMB function.

It is still another object of the present invention to provide a method for managing a number of different broadcast type channels provided through DMB while classifying them into audio broadcasts, video broadcasts, data broadcasts, etc. in a mobile terminal having a DMB function.

It is yet another object of the present invention to provide a method for displaying an EPG separately from DMB video so that the user can select a desired broadcast from a number of different broadcasts received while watching the DMB video in a terminal having a DMB function.

In accordance with one aspect of the present invention, there is provided a method for managing channel information in a Digital Multimedia Broadcast (DMB) device, the method comprising: managing, in the DMB device, channel information of each of different channel types of DMB independently.

In accordance with another aspect of the present invention, there is provided a method for managing channel information in a Digital Multimedia Broadcast (DMB) device including at least two display units, the method comprising: displaying a DMB of a certain channel on a first display unit of the at least two display units; and displaying an Electronic Program Guide (EPG) on a second display unit of the at least two display units if the first and second display units are simultaneously viewable.

In accordance with another aspect of the present invention, there is provided a Digital Multimedia Broadcast (DMB) terminal for displaying an Electronic Program Guide (EPG), the terminal comprising: a main display unit; a sub display unit; and a controller to display video of a program received through a specific DMB channel on the main display unit and to display EPG information on the sub display unit, when the sub display unit is viewable.

The foregoing and other objects, features, aspects and advantages of the present invention will become more apparent from the following detailed description of the present invention when taken in conjunction with the accompanying drawings.

The above and other objects, features and other advantages of the present invention will be more clearly understood from the following detailed description taken in conjunction with the accompanying drawings, in which:

FIG. 1 shows the configuration of a DMB receiver according to a related art;

FIG. 2 shows a mobile terminal including a general DMB reception function according to a related art;

FIG. 3(a) shows a mobile terminal which displays audio channel information on a sub screen while outputting an audio broadcast with a folder of the terminal closed according to an embodiment of the present invention;

FIG. 3(b) shows the configuration of a DMB receiver according to an embodiment of the present invention;

FIG. 4 is a flow chart illustrating a method for managing channel information in a DMB receiver according to an embodiment of the present invention;

FIGs. 5(a) and 5(b) schematically show the configuration of a mobile terminal for displaying an EPG according to an embodiment of the present invention; and

FIG. 6 is a flow chart illustrating a method for displaying an EPG according to an embodiment of the present invention.

Preferred embodiments of a DMB receiver and a method for managing channel information in a DMB receiver according to the present invention will now be described in detail with reference to the accompanying drawings.

The present invention can be applied to various types of mobile terminals such as mobile phones or PDAs having DMB reception and playback functions. In the present invention, an audio channel map (A_CH MAP) for audio channels provided through DMB is managed separately from or independently of a video channel map (V_CH MAP) for video channels and a data channel map (D_CH MAP) for data channels. Only the audio channel information stored in the audio channel map is displayed on the screen of the mobile terminal at the request of the user. That is, different types of broadcast channels are separately managed and stored according to their broadcast type, such that only the desired type (e.g., video broadcast, audio broadcast, or data broadcast) of broadcast channels can be displayed to a user per user's request.

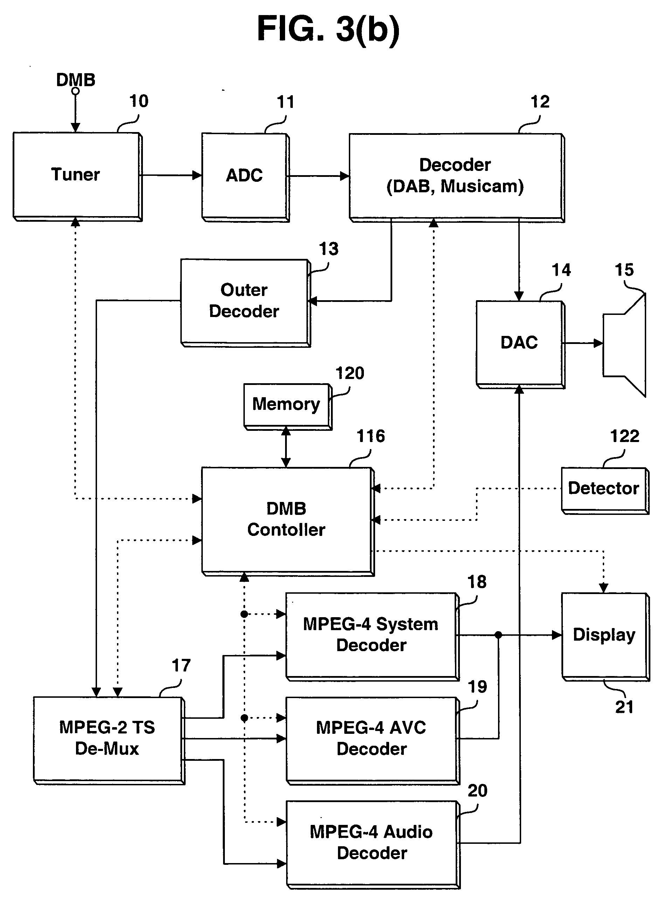

For example, according to an embodiment of the present invention, if the user intends to select a desired audio broadcast to listen to using a folder type mobile terminal, the mobile terminal displays only the audio channel information stored in the audio channel map on the sub screen (for example, a sub LCD) of the mobile terminal as shown in FIG. 3(a). Then, if the user selects a specific audio broadcast from the displayed audio channel information, the mobile terminal tunes in to a channel corresponding to the selected audio broadcast/channel with reference to the audio channel map, and outputs a sound of a received audio broadcast through an earphone connected to the mobile terminal.

Accordingly, the user can easily select and listen to a desired audio broadcast even when the mobile terminal is closed. Similarly, data broadcast information may also be displayed on the sub screen with the mobile terminal being closed (folder closed), thereby allowing the user to easily select and view a desired data broadcast. This and other methods and applicable devices are now described below in detail.

FIG. 3(b) is a block diagram of a DMB receiver, for example, a mobile terminal such as a mobile phone or a PDA having a DMB reception and playback function according to an embodiment of the present invention.

As shown in FIG. 3 (b), the DMB receiver comprises a tuner 10, an A/D converter 11, a decoder 12, an outer decoder 13, a D/A converter 14, a speaker 15, a DMB controller 116, an MPEG-2 TS demuxer 17, an MPEG-4 system decoder 18, an MPEG-4 Advanced Video Coding (AVC) decoder 19, an MPEG-4 audio decoder 20, a display 21, a memory 120, and a detector 122. All the components of the DMB receiver are operatively coupled. Elements with the same reference numerals as the DMB receiver of FIG. 1 are the same or like elements, and thus the description thereof is omitted.

According to an embodiment of the present invention, the DMB controller 116 generates separate maps of different types of broadcast channels (e.g., a map of audio broadcast channels, a map of video broadcast channels, and a map of data broadcast channels, etc.) as well as an integrated map integrating these different types of broadcast channel information. The DMB controller 116 manages these maps and selectively accesses them as needed to provide the map information to a user. The separate and integrated maps can be stored in the memory 120. The detector 122 can be used to detect the open/closed state of the mobile terminal. For instance, the detector 122 can detect whether or not the mobile terminal of a folder or slide type is opened and this detection can be used to display appropriate information according to another embodiment of the present invention.

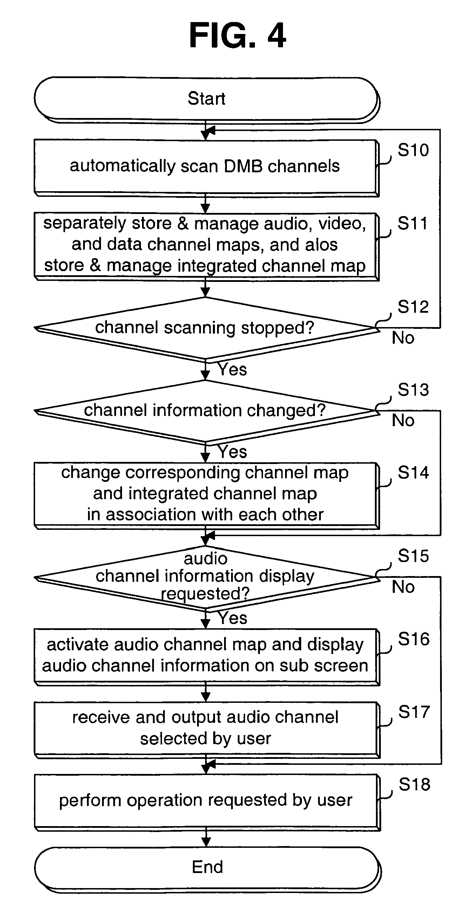

FIG. 4 is a flow chart of a method for managing channel information in a DMB receiver according to the present invention. This method can be implemented in the mobile terminal (DMB receiver) of FIG. 3(b) or in other suitable device or system.

For example, when the user requests that an automatic DMB channel setting be performed, the DMB controller 116 designed as described above with reference to FIG. 3 (b) controls the operation of the tuner 10, the decoder 12, and the like to sequentially scan DMB channels (S10).

The DMB controller 116 manages channel information of audio, video, and data broadcasts provided through DMB as an integrated channel map (A/V/D_CH MAP), and at the same time, separately stores and manages an audio channel map (A_CH MAP), a video channel map (V_CH MAP), and a data channel map (D_CH MAP) (S11 and S12). The channel information can include, but is not limited to, at least one of the following: a broadcast type, a channel number, a broadcast name, a broadcast provider name, an Electronic Program Guide (EPG), and the like of each channel.

Here, the broadcast type indicates whether the corresponding channel belongs to an audio broadcast, a video broadcast, or a data broadcast. The DMB controller 116 periodically receives and temporally stores Electronic Program Guide (EPG) information of each channel.

The separate audio, video and data channel maps can be generated in a variety of different ways. For instance, in one example, the audio, video and data channel information can be separately obtained from the integrated channel map. In another example, the audio, video and data channel information can be selectively obtained directly from the received DMB signal video.

When the user requests that certain channel information be changed (S13), the DMB controller 116 changes the appropriate channel information stored in a corresponding channel map and also changes the corresponding channel information stored in the integrated channel map in association with the corresponding channel information in the channel map (S14). That is, both the integrated channel map and the appropriate broadcast type channel map are both updated to reflect the changes/deletions/additions associated with the channels.

For example, when the user requests that an audio channel stored in the audio channel map be deleted, the DMB controller 116 deletes the audio channel stored in the audio channel map and also automatically performs an operation for searching for and deleting a corresponding audio channel included in the integrated channel map.

In addition, when the user requests that an audio channel stored in the integrated channel map be deleted, the DMB controller 116 deletes the audio channel stored in the integrated channel map and also automatically performs an operation for searching for and deleting a corresponding audio channel included in the audio channel map.

Meanwhile, if the user requests that the audio channel information be displayed (S15), for example, if the user presses a DMB selection button mounted on a side surface of a mobile terminal of a folder type having its sub LCD closed as described above with reference to FIG. 3 (a), the DMB controller 116 activates the separately stored audio channel map (A_CH MAP) and displays the information of the audio channels (from the separately stored audio channel map) selectable by the user in a list format or the like on the sub LCD of the mobile terminal(S16). Each channel item of the audio channel information displayed in the list format or some other format can include a channel number, a broadcast name, a broadcast provider name, an EPG, and the like.

If the user selects a certain channel of audio broadcast with reference to the audio channel information displayed on the sub LCD, the DMB controller 116 controls the operation of the tuner 10, the decoder 12, and the like to tune in to a channel corresponding to the selected audio broadcast and then to output a received audio broadcast through an earphone connected to the mobile terminal (S17).

Then, the DMB controller 116 performs an operation requested by the user such as an operation associated with playing the selected audio broadcast channel (S18). Accordingly, the user can easily select and listen to a desired audio broadcast even when the mobile terminal is closed, e.g., a mobile terminal of a folder type is closed by flipping down the mobile terminal.

If the present invention is applied to a DMB receive-only terminal having no display function such as a set top box, the DMB controller 116 can activate the video channel map (V_CH MAP) by default if a video jack plug is connected to the DMB receive-only terminal so that the user can easily select a video channel; or can activate the audio channel map (A_CH MAP) by default if no video jack plug is connected to the DMB receive-only terminal so that the user can easily select an audio channel.

According to an embodiment, the broadcast types include at least one of a radio broadcast, a television broadcast, and a data broadcast. A radio broadcast may be selected as a broadcast type to be received if it is requested that a DMB be received in a case where a screen output of a television broadcast is restricted. The case where the screen output of the television broadcast is restricted may include a case where a folder of a folder type DMB receiver including an external screen display unit is closed.

The present invention is also directed to a method for displaying an Electronic Program Guide (EPG) according to an embodiment. This method can be applied to various types of mobile terminals such as mobile phones or PDAs having a DMB function. When the EPG display method is applied to a slide type mobile phone having main and sub screens (for example, separate main and sub LCDs), a currently received DMB video is displayed on the main screen of the mobile terminal and at the same time an EPG information is separately displayed on the sub screen of the mobile terminal, so that the DMB video and the EPG information can be displayed at the same time on the mobile terminal.

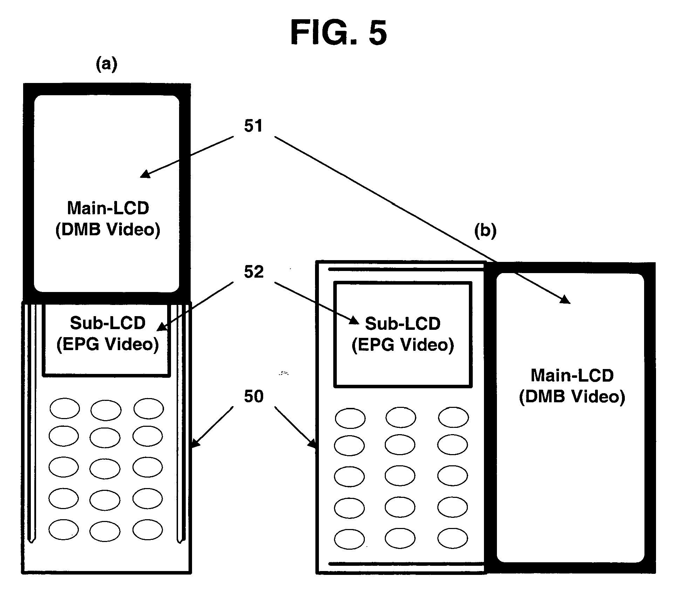

FIGs. 5 (a) and 5 (b) schematically show two different examples of a slide type mobile terminal for displaying an EPG according to an embodiment of the present invention.

Referring to FIGs. 5 (a) and 5 (b), the mobile terminal according to this embodiment includes a main display unit 51, a sub display unit 52, and a main body 50, all operatively coupled. The main display unit 51 displays video of a DMB signal. The sub display unit 52 displays an EPG included in a broadcast signal. The main body 50 includes a number of input keys/buttons and is designed to be integrated with the sub display unit 52. The main display unit 51 is separated from the main body 50 in a slide fashion. The mobile terminal of FIGs. 5 (a) and 5 (b) also includes the DMB receiver of FIG. 3(b) such that the detector 122 can detect when the mobile terminal is slid to open or close the mobile terminal. When the mobile terminal is in the opened position, then both the main display unit 51 and the sub display unit 52 may be simultaneously viewable to a user.

When the main display unit 51 is separated from the main body 50 in a slide (open) fashion, DMB video is displayed on the main display unit 51 and an EPG is displayed on the sub display unit 52 at the same time according to the present invention.

Particularly, FIG. 5 (a) shows a vertical slide type mobile terminal and FIG. 5(b) shows a horizontal slide type mobile terminal. The vertical slide type mobile terminal is designed such that the main display unit 51 is separated from the main body 50 by sliding vertically, whereas the horizontal slide type mobile terminal is designed such that the main display unit 51 is separated from the main body 50 by sliding horizontally.

As discussed above, the mobile terminal according to the present invention includes the detector 122 for detecting whether the main display unit 51 has been separated from the main body 50.

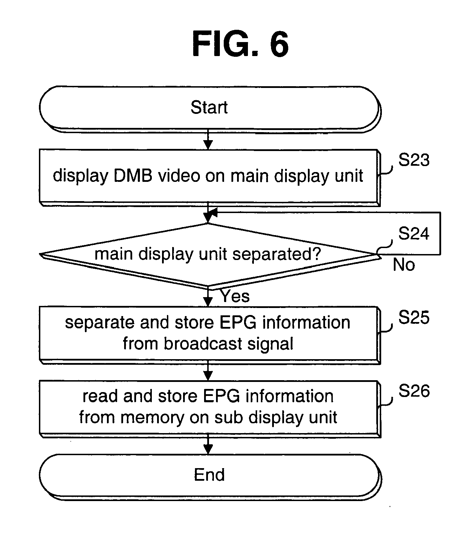

FIG. 6 is a flow chart illustrating a method for displaying an EPG according to an embodiment of the present invention. This method can be applied to the slide type mobile terminal as shown in FIGs. 5 (a) and 5(b), or to other suitable device.

Referring to FIG. 6, the DMB controller 116 of the mobile terminal displays video, included in a DMB signal received through a channel selected by the user, on the main display unit 51 of the mobile terminal S23).

The DMB controller 116 then detects using, e.g. , the detector 122 whether the main display unit 51 has been separated from the main body 50 (S24).

When the main display unit 51 has been slid and separated from the main body 50, the DMB controller 116 separates EPG information from the received broadcast signal and stores the separated EPG information in the memory 120 or the like (S25), and reads the EPG information from the memory 120 and displays the read EPG information on the sub display unit 52 provided on the main body 50 (S26) . That is, the mobile terminal of the present invention is configured to display the desired broadcast signal (e.g., video, audio or data broadcast) on a first display screen of the mobile terminal and at the same time to display the EPG information on a second display screen of the mobile terminal. This can be triggered when the mobile terminal is in the opened state (slide operation), wherein both the first and second display screens of the mobile terminal are simultaneously viewable to the user. Accordingly, the user can check the EPG information displayed on the sub display unit 52 while watching the DMB video (or audio or data broadcast) on the main display unit 51.

According to another embodiment of the present invention, the embodiment of FIG. 4 can be combined with the embodiment of FIG. 6. In that case, the management of different types of broadcast channels separately and integrally and the selective display of only the desired broadcast type channels are provided in the mobile terminal as well as the displaying of the desired broadcast and the EPG on the different display screens of the mobile terminal at the same time, simultaneously.

Although the DMB type signal processing has been discussed, the present invention covers the management and reproduction of other types of broadcast signals.

As is apparent from the above description, a method for managing channel information in a DMB receiver according to the present invention can display only the information of channels of a broadcast type desired by the user, among different types of broadcasts such as audio, video, and data broadcasts provided through DMB. The method also allows the user to view the EPG information while watching the DMB video so that the user can easily select a desired broadcast, thereby improving the user convenience.

## Claims

1. A method for managing channel information in a Digital Multimedia Broadcast (DMB) device, the method comprising:
managing, in the DMB device, channel information of each of different channel types of DMB independently.

2. The method according to claim 1, wherein the managing step includes:
storing, in the DMB device, the channel information of each of the different channel types of DMB separately.

3. The method according to claim 2, wherein the managing step further includes:
in response to a user's selection of a particular DMB channel type to be provided, displaying channel information of the selected DMB channel type among the stored channel information of different channel types of DMB.

4. The method according to claim 2, further comprising:
generating an integrated channel information integrating the channel information of the different channel types of DMB; and
managing the integrated channel information in the DMB device.

5. The method according to claim 4, wherein changes to the channel information are applied to both the stored integrated channel information and the separately stored channel information.

6. The method according to claim 1, further comprising:
managing the channel information of each of the different channel types of DMB together as an integrated channel information.

7. The method according to any of claims 1 to 6, wherein each channel information includes at least one of the following:
a channel number, a channel name, and a channel provider name for each of corresponding channels.

8. The method according to any of claims 1 to 7, wherein the different channel types of DMB include at least one of an audio broadcast, a video broadcast including video and audio data, and a data broadcast.

9. The method according to claim 8, further comprising:
automatically selecting an audio broadcast type as a desired DMB channel type, if the DMB device is without a display unit.

10. The method according to claim 8, wherein the DMB device is without a display unit, and the method further comprises:
automatically selecting a video broadcast type as a desired DMB channel type, if the DMB device is connected to a display device; and
automatically selecting an audio broadcast type as a desired DMB channel type, if the DMB is not connected to the display device.

11. The method according to claim 8, further comprising:
automatically selecting an audio or data broadcast type as a desired DMB channel type, if the DMB device includes at least two display units and only one of the at least two display units is viewable.

12. The method according to claim 11, wherein the only one viewable display unit is an external display unit.

13. The method according to claim 1, wherein the DMB device includes at least two display units, and the method further comprises:
displaying an Electronic Program Guide (EPG) on one of the at least two display units if two of the at least two display units are viewable.

14. The method according to any of claims 1 to 13, wherein the DMB device is a slide type DMB device having a main display unit and a sub display unit, and the method further comprises:
detecting if the slide type DMB device in an opened state; and
displaying an Electronic Program Guide (EPG) on the sub display unit if the detecting step indicates that the slide type DMB device is in the opened state.

15. The method according to any of claims 1 to 14, wherein in the managing step, the DMB device is a mobile terminal.

16. A method for managing channel information in a Digital Multimedia Broadcast (DMB) device including at least two display units, the method comprising:
displaying a DMB of a certain channel on a first display unit of the at least two display units; and
displaying an Electronic Program Guide (EPG) on a second display unit of the at least two display units if the first and second display units are simultaneously viewable.

17. The method according to claim 16, wherein the displayed EPG pertains to the displayed DMB of the certain channel.

18. The method according to claim 17, wherein the DMB device is a slide type DMB device having a main display unit and a sub display unit, and the method further comprises:
detecting if the slide type DMB device in an opened state, so that the displaying step displays the EPG on the sub display if the detecting step indicates that the slide type DMB device is in the opened state.

19. A Digital Multimedia Broadcast (DMB) terminal for displaying an Electronic Program Guide (EPG), the terminal comprising:
a main display unit;
a sub display unit; and
a controller to display video of a program received through a specific DMB channel on the main display unit and to display EPG information on the sub display unit, when the sub display unit is viewable.

20. The DMB terminal according to claim 19, wherein the sub display unit is either viewable or not viewable depending on a movement of the main display unit.

21. The DMB terminal according to claim 20, wherein the main display unit moves vertically or horizontally.

22. The DMB terminal according to claim 20 or 21, further comprising:
a detector to detect the movement of the main display unit so as to determine when the sub display unit is viewable.

23. The DMB terminal according to claim 20, 21, or 22, wherein the main display unit is exposed on an external panel of the DMB terminal, whereas the sub display unit is exposed on an inner panel of the DMB terminal.

24. The DMB terminal according to any of claims 20 to 23, wherein the DMB terminal is a cellular phone or a PDA.
